# EUROPÄISCHE PATENTSCHRIFT

(11) **EP 3 882 121 B1**
(45) Veröffentlichungstag und Bekanntmachung des Hinweises auf die Patenterteilung: **26.04.2023**
(21) Anmeldenummer: 20164652.8
(22) Anmeldetag: 20.03.2020
(51) Int. Cl.: B62M 6/90, B62J 43/13, B62J 45/414, B60L 50/64

(54) **ELEKTROFAHRRAD UND MODULARE ELEKTROFAHRRAD-TRAKTIONSBATTERIE**
ELECTRIC BICYCLE AND MODULAR ELECTRIC BICYCLE TRACTION BATTERY
BICYCLETTE ÉLECTRIQUE ET BATTERIE DE TRACTION DE BICYCLETTE ÉLECTRIQUE MODULAIRE

(43) Veröffentlichungstag der Anmeldung: 22.09.2021
(73) Patentinhaber: Amprio GmbH, 41460 Neuss (DE)
(72) Erfinder: PAGEL, Arne, 41460 Neuss (DE); MISGELD, Berno Johannes Engelbert, 41460 Neuss (DE)
(74) Vertreter: terpatent Patentanwälte ter Smitten Eberlein-Van Hoof Rütten Daubert

(56) Entgegenhaltungen:
- EP-A1- 3 296 190
- EP-A2- 3 587 236
- DE-A1-102009 035 479
- DE-A1-102012 013 497
- DE-A1-102013 013 754
- US-A1- 2016 288 875

## Beschreibung

Die Erfindung bezieht sich auf ein Elektrofahrrad mit einem elektrischen Traktionsantrieb und mehreren Traktionsbatterien, sowie auf eine modulare Elektrofahrrad-Traktionsbatterie.

Ein Elektrofahrrad weist einen elektrischen Traktionsantrieb auf, der in der Regel, jedoch nicht notwendigerweise, ausschließlich unterstützend arbeitet, also die humane Tretleistung der Fahrerperson unterstützt. Das Elektrofahrrad kann auch als reines Kraftfahrzeug ausgebildet sein. Das Elektrofahrrad weist zur Versorgung des Traktionsantriebs mit elektrischer Energie mindestens eine modulare Traktionsbatterie auf, die in der Regel werkzeugfrei entnehmbar ist, um sie getrennt von dem Fahrradrahmen des Elektrofahrrads aufladen zu können. Um das Eigengewicht der mobilen Traktionsbatterien in einem vertretbaren Rahmen zu halten, und um die Traktionsbatterie bezüglich ihrer Größe so kompakt zu halten, dass sie problemlos an einem Fahrradrahmen untergebracht werden kann, ist die Kapazität einer typischen Elektrofahrrad-Traktionsbatterie in der Praxis auf maximal ca. 1 kWh begrenzt.

Für größere Entfernungen, für schwieriges Gelände und für schwere Elektrofahrräder, beispielsweise für Lastenfahrräder, besteht daher immer häufiger die Möglichkeit, zwei oder sogar noch mehr Traktionsbatterien an dem Fahrradrahmen des Elektrofahrrads unterzubringen und zu nutzen. Die Kommunikation aller applizierter Traktionsbatterien mit einem zentralen elektronischen Mehrbatterien-Managementmodul erfolgt in der Regel über ein Bussystem, beispielsweise über einen sogenannten CAN-Bus. Zwar kann das Mehrbatterien-Managementmodul eine bestimmte Traktionsbatterie anhand ihrer Identifikationsnummer identifizieren, jedoch besteht für das Mehrbatterien-Managementmodul keine Möglichkeit, festzustellen, an welcher Fahrradrahmen-Position sich eine bestimmte identifizierte Traktionsbatterie befindet. Das Mehrbatterien-Managementmodul kann daher nicht über die Rahmenposition einer bestimmten Traktionsbatterie informieren, die beispielsweise aufgeladen werden muss.

Ein Elektrofahrrad mit den Merkmalen der Präambel des Anspruchs 1 ist in der EP 3 587 236 A2 gezeigt. Die Merkmale der Präambel von Anspruch 6 sind in der DE 10 2009 035479 A1 gezeigt, welche eine Traktionsbatterie mit einem Sensor zeigt.

Aufgabe der Erfindung vor diesem Hintergrund ist es, eine modulare mobile Elektrofahrrad-Traktionsbatterie und ein Elektrofahrrad mit mehreren Traktionsbatterien zu schaffen, die bzw. das die Angabe der Rahmenposition einer bestimmten Traktionsbatterie bei geringem technischem Aufwand ermöglicht.

Diese Aufgabe wird erfindungsgemäß gelöst mit einem Elektrofahrrad mit den Merkmalen des Anspruchs 1 bzw. mit einer modularen Elektrofahrrad-Traktionsbatterie mit den Merkmalen des Anspruchs 6.

Das erfindungsgemäße Elektrofahrrad weist einen starren Fahrradrahmen und einen an dem Fahrradrahmen befestigten elektrischen Traktionsantrieb auf. Ferner weist das Elektrofahrrad mindestens zwei mobile und modulare Traktionsbatterien auf, die an verschiedenen Rahmenpositionen an dem Elektrofahrrad befestigt sind. Unter modularen Traktionsbatterien werden vorliegend Traktionsbatterien verstanden, die äußerlich im Wesentlichen identisch zueinander ausgebildet sind, also grundsätzlich direkt gegeneinander ausgetauscht werden können. Unter einer mobilen Traktionsbatterie wird eine Traktionsbatterie verstanden, die über Einrichtungen verfügt, durch die sie mit wenigen und einfachen Handgriffen und werkzeuglos von dem Fahrradrahmen entfernt bzw. an diesem fixiert werden kann. Selbstverständlich kann jedoch ein Schlüssel und ein korrespondierendes Schloss vorgesehen sein, um die applizierte Traktionsbatterie gegen Diebstahl zu schützen.

Vorzugsweise ist vorgesehen, dass an jeder Traktionsbatterie-Rahmenposition ein Batteriehalter vorgesehen ist, wobei alle Batteriehalter des Fahrradrahmens identisch zueinander ausgebildet sind. Jeder Batteriehalter weist bevorzugt jeweils einen Entriegelungs-Riegel auf, durch dessen Betätigung die Traktionsbatterie auf einfache Weise von dem Batteriehalter gelöst und aus diesem entnommen werden kann.

Das Elektrofahrrad weist ein zentrales elektronisches Mehrbatterien-Managementmodul auf, das den Ladezustand der applizierten Traktionsbatterien ermittelt. Ferner sind an dem Elektrofahrrad Signalverbindungen vorgesehen, durch die die Traktionsbatterien informell mit dem Mehrbatterien-Managementmodul verbunden sind. Die Signalverbindungen können drahtlos oder drahtgebunden ausgeführt sein. Besonders bevorzugt sind die Signalverbindungen durch ein drahtgebundenes Bus-System verwirklicht, beispielsweise durch einen sogenannten CAN-Bus.

Jede Traktionsbatterie weist einen elektronischen Beschleunigungs-Sensor, einen elektronischen Raumlage-Sensor, beispielsweise ein Gyroskop, und/oder einen elektronischen Erdmagnetfeld-Sensor auf. Jede Traktionsbatterie weist also mindestens einen Sensor auf, der einen Hinweis auf die räumliche Position der betreffenden Traktionsbatterie im Verhältnis zur Erde und/oder im Verhältnis zum Fahrradrahmen bzw. im Verhältnis zu dem Mehrbatterien-Managementmodul zur Verfügung stellt. Vorzugsweise sind mehrere der vorgenannten Sensor-Typen vorgesehen. Vorzugsweise ist der Sensor mehrdimensional ausgebildet. Unter einem mehrdimensionalen Sensor ist ein Sensor zu verstehen, der mindestens zweidimensional ausgebildet ist, also bezüglich mindestens zweier Raumachsen Sensorwerte zur Verfügung stellt.

Ein Raumlage-Sensor gibt die räumliche Winkellage der Traktionsbatterie im Verhältnis zu der lokalen terrestrischen Horizontalebene an, also beispielsweise den Nickwinkel um die Z-Achse und/oder den Rollwinkel um die X-Achse des Elektrofahrrads. Ein Beschleunigungs-Sensor gibt die Größe einer Beschleunigung in Bezug zu einer Elektrofahrrad-Achse, beispielsweise zur X-Achse und/oder zur Y-Achse an. Ein Erdmagnetfeld-Sensor ist ein elektronischer Kompass, und gibt die Orientierung der X-Achse des Elektrofahrrads im Verhältnis zum Magnetfeld der Erde an.

Die Sensordaten des Traktionsbatterie-Sensors bzw. der Traktionsbatterie-Sensoren werden über die Signalverbindung an das Mehrbatterien-Managementmodul übermittelt.

Dem Mehrbatterien-Managementmodul ist ein Rahmenpositions-Kennwertspeicher zugeordnet, in dem für alle Traktionsbatterie-Rahmenpositionen typische Traktionsbatterie-Sensor-Referenzwerte aller in der Traktionsbatterie vorhandenen Raumsensoren fest eingespeichert sind. Der Rahmenpositions-Kennwertspeicher ist also für jedes Fahrradrahmen-Modell einschließlich der daran an verschiedenen Rahmenpositionen vorgesehenen Traktionsbatterien individuell programmiert. Im Allgemeinen unterscheiden sich die verschiedenen Rahmenpositionen der Traktionsbatterien an dem Fahrradrahmen durch ihre voneinander abweichende Orientierung im Raum. Zeigt beispielsweise ein bestimmtes Längsende der Traktionsbatterie, beispielsweise das Griffende, in der einen Rahmenposition nach vorne, und in der anderen Rahmenposition nach hinten, ergeben sich für die beiden Traktionsbatterie-Rahmenpositionen verschiedene Richtungen im Erdmagnetfeld, verschiedene Neigungen im Verhältnis zur terrestrischen Horizontalen oder verschiedene Beschleunigungen im Verhältnis zum Fahrradrahmen. Tatsächlich sind in der Praxis nur wenige Konstellationen denkbar, bei denen alle Sensordaten für zwei verschiedene Rahmenpositionen praktisch identisch sind.

Das Mehrbatterien-Managementmodul wird auf diese Weise in die Lage versetzt, durch einen Abgleich der Sensorwerte einer Traktionsbatterie mit den in dem Rahmenpositions-Kennwertspeicher hinterlegten Sensor-Referenzwerten indirekt die Rahmenposition der betreffenden Traktionsbatterie an dem Fahrradrahmen zu bestimmen, und beispielsweise der einmaligen Identifikationsnummer der betreffenden Traktionsbatterie zuzuordnen.

Das Elektrofahrrad weist eine Gesamt-Ladezustands-Informationsschnittstelle auf, die den Ladezustand der Traktionsbatterien zusammen mit ihrer Rahmenposition ausgibt. Die Informationsschnittstelle kann bevorzugt eine optische Anzeigeeinheit sein, die der Fahrerperson den Batterie-Ladezustand einer bestimmten Traktionsbatterie zusammen mit ihrer Rahmenposition anzeigt. Auf diese Weise kann der Fahrerperson optisch mitgeteilt werden, dass die beispielsweise am Gepäckträger positionierte Traktionsbatterie leer ist und aufgeladen werden sollte. Die Fahrerperson muss also nicht mehr mit Hilfe einer Identifikationsnummer die betreffende Traktionsbatterie suchen, sondern erhält von der Informationsschnittstelle eine unmissverständliche Information über die Rahmenposition der betreffenden Traktionsbatterie.

Alternativ oder ergänzend kann die Gesamt-Ladezustands-Informationsschnittstelle auch als drahtloses Sendemodul ausgebildet sein, das beispielsweise eine elektronische Nachricht versendet, beispielsweise an ein Servicecenter. Eine derartige Ausführung ist beispielsweise für gewerbliche Anwendungen sinnvoll, bei denen die Fahrerperson nicht die Aufgabe hat, sich um die Wartung und Aufladung der Traktionsbatterien zu kümmern.

Durch die weite Verbreitung und den standardisierten Einsatz von mehrdimensionalen elektronischen Beschleunigungs-Sensoren, mehrdimensionalen elektronischen Raumlage-Sensoren und elektronischen Erdmagnetfeld-Sensoren in Mobiltelefonen sind derartige Sensoren bzw. Multisensor-Anordnungen extrem preiswert als standardisierte Bauteile erhältlich. Es verursacht daher keine nennenswerten Mehrkosten, derartige Sensoren bzw. Multisensor-Anordnungen in einer Traktionsbatterie vorzusehen. Auf diese Weise kann mit einer preiswerten Lösung eine Lokalisierung einer Traktionsbatterie an einem Fahrradrahmen, an dem mehrere Traktionsbatterien vorgesehen sind, durch das Mehrbatterien-Managementmodul erfolgen und an eine entsprechende Informationsschnittstelle weitergegeben werden.

Auf mechanische oder berührungslose und relativ kostspielige Anwesenheits-Detektoren oder Batteriehalter-Identifikatoren an den Batteriehaltern zur Detektion der Anwesenheit einer Traktionsbatterie und zum Auslesen der Traktionsbatterie-Identifikationsnummer, bzw. zur Verknüpfung der Traktionsbatterie-Identifikationsnummer mit der Rahmenposition des Batteriehalters, kann auf diese Weise vollständig verzichtet werden. Besonders bevorzugt sind keine derartigen Anwesenheits-Detektoren oder Batteriehalter-Identifikatoren an den Batteriehaltern vorgesehen.

Vorzugsweise ist die Informationsschnittstelle als Anzeigeeinheit ausgebildet, die den Batterie-Ladezustand einer Traktionsbatterie jeweils zusammen mit ihrer Rahmenposition optisch anzeigt.

Vorzugsweise ist vorgesehen, dass rahmenfest mit dem Fahrradrahmen ein elektronischer Beschleunigungs-Sensor, ein elektronischer Raumlage-Sensor und/oder ein elektronischer Erdmagnetfeld-Sensor vorgesehen ist. Besonders bevorzugt ist der genannte Sensor bzw. sind die genannten Sensoren jeweils mehrdimensional ausgebildet. Besonders bevorzugt sind die Sensoren innerhalb des Traktionsantriebs oder der Anzeigeeinheit angeordnet. Auf diese Weise können die Sensorwerte der Traktionsbatterie verglichen werden mit den Sensorwerten der rahmenfesten Sensoren, sodass durch diesen Vergleich und Abgleich das Mehrbatterien-Managementmodul weitere Informationen über die Rahmenpositionen der Traktionsbatterien erhalten. Hierdurch wird die Redundanz der Positionsermittlung verbessert.

Die eigenständig erfindungsgemäße modulare Elektrofahrrad-Traktionsbatterie weist ein elektrisches Energiespeicherelement zur Speicherung elektrischer Energie auf. Ferner weist die Traktionsbatterie eine Ladeüberwachung auf, die den Ladezustand des Energiespeicherelements ermittelt und überwacht. Die Traktionsbatterie weist einen elektronischen Beschleunigungs-Sensor, einen elektronischen Raumlage-Sensor und/oder einen elektronischen Erdmagnetfeld-Sensor auf. Auf diese Weise wird ein Mehrbatterien-Managementmodul eines Elektrofahrrads in die Lage versetzt, beispielsweise mit Hilfe eines Rahmenpositions-Kennwertspeichers, in dem für alle Traktionsbatterie-Rahmenpositionen typische Traktionsbatterie-Sensor-Referenzwerte hinterlegt sind, die Rahmenposition einer bestimmten Traktionsbatterie zu ermitteln.

Die Traktionsbatterie ist mit einem Rahmenpositions-Kennwertspeicher ausgestattet, in dem für alle möglichen Traktionsbatterie-Rahmenpositionen an einem konkreten Fahrradrahmen typische Traktionsbatterie-Sensor-Referenzwerte hinterlegt sind. Die Traktionsbatterie-Ladeüberwachung ermittelt aus den gemessenen Sensorwerten des mindestens einen Traktionsbatterie-Sensors und mit Hilfe der in dem Rahmenpositions-Kennwertspeicher hinterlegten typischen Traktionsbatterie-Sensor-Referenzwerte die Traktionsbatterie-Rahmenposition. Die auf diese Weise innerhalb der Traktionsbatterie ermittelte Traktionsbatterie-Rahmenposition wird an die Traktionsbatterie-Schnittstelle übermittelt.

Im Folgenden wird ein Ausführungsbeispiel der Erfindung anhand der Zeichnungen näher erläutert. Es zeigen:
Figur 1 eine schematische Darstellung eines Elektrofahrrads mit einem Traktionsantrieb und beispielhaft sechs modularen Traktionsbatterien, die an verschiedenen Rahmenpositionen des Elektrofahrrads befestigt sind, und

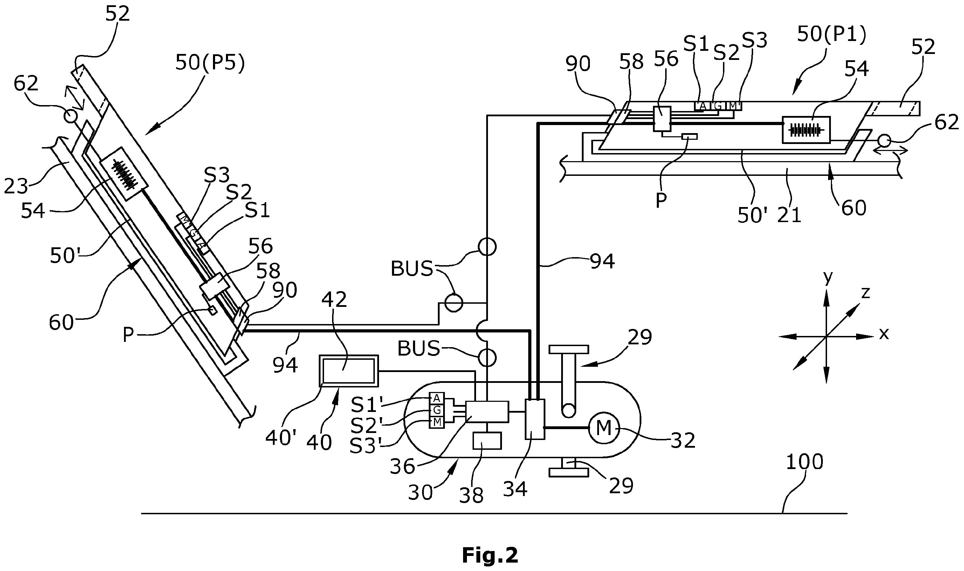

Figur 2 eine schematische und beispielhafte Darstellung von zwei Traktionsbatterien, dem Traktionsantrieb und einem zentralen elektronischen Mehrbatterien-Managementmodul des Elektrofahrrads der Figur 1.

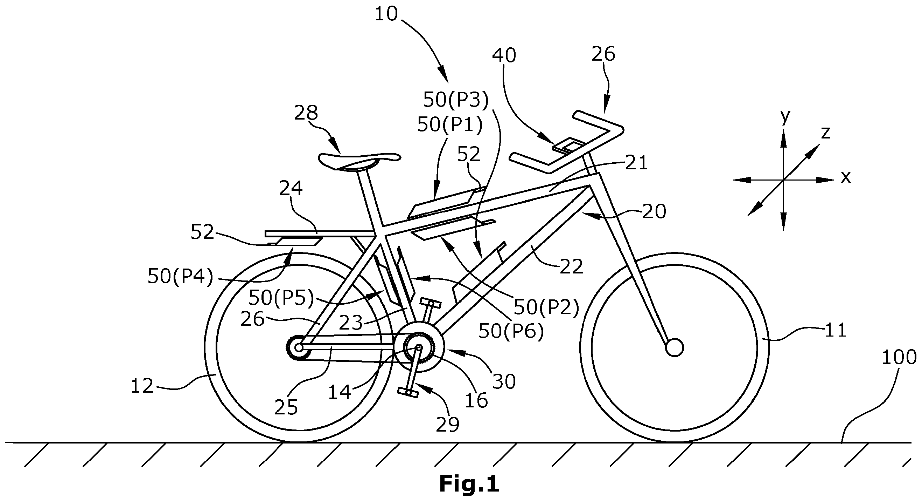

In der Figur 1 ist schematisch ein Elektrofahrrad 10 mit einem Fahrradrahmen 20 dargestellt, wobei an dem Fahrradrahmen 20 ein elektrischer Traktionsantrieb 30 befestigt ist, der vorliegend als sogenannter Mittelmotor ausgebildet ist. Der Traktionsantrieb 30 weist eine Tretlagerwelle 14 und ein Abtriebs-Kettenblatt 16 auf, das von einem elektrischen Antriebsmotor 32 innerhalb des Traktionsantriebs 30 angetrieben wird. Ferner sind durch den Traktionsantrieb 30 die beiden Tretkurbeln 29 gelagert, über die eine Fahrerperson eine humane Tretleistung in den Traktionsantrieb 30 einbringt.

Der Fahrradrahmen 20 ist vorliegend ein starrer und ungefederter Diamantrahmen, mit einem Oberrohr 21, einem Unterrohr 22 und einem Sattelrohr 23, die zusammen ein Dreieck bilden, sowie jeweils einer ungefähr horizontalen Kettenstrebe 25 und einer diagonalen Sitzstrebe 26 zu jeder Seite eines Hinterrades 12. Ferner weist der Fahrradrahmen 20 noch einen Gepäckträger 24 auf, der sich ausgehend von dem Sattelrohr 23 ungefähr horizontal nach hinten erstreckt. Von dem Sattelrohr 23 wird ein Sattel 28 gehalten. Das Elektrofahrrad 10 weist ferner ein lenkbares Vorderrad 11 sowie einen Lenkerbügel 26 auf, der eine als optische Anzeigeeinheit 40' ausgebildete Gesamt-Ladezustands-Informationsschnittstelle 40 hält.

An dem Elektrofahrrad 10 bzw. an dem Fahrradrahmen 20 sind vorliegend rein beispielhaft insgesamt sechs modulare und mobile Traktionsbatterien 50 an sechs verschiedenen Positionen P1-P6 dargestellt. Alle Traktionsbatterien 50 sind äußerlich identisch zueinander ausgebildet, können jedoch verschiedene elektrische Kapazitäten aufweisen. Jede Traktionsbatterie 50 wird jeweils von einem Batteriehalter 60 gehalten, der in der Figur 1 jedoch nicht dargestellt ist. Auch alle sechs Batteriehalter 60 sind zueinander identisch ausgebildet. Jeder Batteriehalter 60 weist jeweils einen Entriegelungs-Regel 62 auf, durch dessen Betätigung die Traktionsbatterie 50 aus dem Batteriehalter 60 auf einfache Weise und werkzeuglos, jedoch nicht notwendigerweise schlüssellos, entnommen werden kann. Für eine einfache Entnehmbarkeit und Transportierbarkeit weist jede Traktionsbatterie 50 an einem vorderen Längsende einen Handgriff 52 auf.

Das Vorderrad 11 und das Hinterrad 12 stehen auf einer Aufstandsfläche 100 auf. Im Folgenden wird die Längsachse des Fahrradrahmens 20 mit X, die Hochachse des Fahrradrahmens 20 mit Y und die Querachse des Fahrradrahmens 20 mit Z bezeichnet. Ferner wird im Folgenden angenommen, dass die Aufstandsfläche 100 exakt in einer Horizontalebene liegt.

Die Traktionsbatterie 50 weist jeweils ein Traktionsbatterie-Gehäuse 50' auf, in dem ein elektrisches Energiespeicherelement 54 und eine elektronische Traktionsbatterie-Ladeüberwachung 56 angeordnet sind. Ferner sind in dem Traktionsbatterie-Gehäuse 50' ein dreidimensionaler elektrischer Beschleunigungs-Sensor S1, ein dreidimensionaler elektronischer Raumlage-Sensor S2 und ein elektronischer Erdmagnetfeld-Sensor S3 angeordnet. Schließlich ist innerhalb des Gehäuses 50' und der Ladeüberwachung 56 informell zugeordnet ein Rahmenpositions-Kennwertspeicher P vorgesehen, in dem für alle möglichen sechs Traktionsbatterie-Rahmenpositionen P1-P6 an dem Fahrradrahmen 20 typische Traktionsbatterie-Sensor-Referenzwerte dauerhaft hinterlegt sind. Durch einen Vergleich bzw. Abgleich der von den Traktionsbatterie-Sensoren S1,S2,S3 ermittelten Sensorwerte mit den in dem Rahmenpositions-Kennwertspeicher P hinterlegten Sensorreferenzwerten kann die Traktionsbatterie-Ladeüberwachung 56 feststellen, an welcher der sechs möglichen Traktionsbatterie-Positionen P1-P6 die Traktionsbatterie 50 angeordnet ist. Die Traktionsbatterie 50 weist eine Traktionsbatterie-Schnittstelle 58 auf, an die die Traktionsbatterie-Ladeüberwachung 56 die ermittelte Traktionsbatterie-Rahmenposition P1-P6 übermittelt.

In einer alternativen Ausführungsform kann die Traktionsbatterie auch ohne einen Rahmenpositions-Kennwertspeicher P ausgestattet sein. In diesem Fall werden die Signale der drei Sensoren S1, S2, S3 direkt an die Traktionsbatterie-Schnittstelle 58 übermittelt.

Wenn die Traktionsbatterie 50 in den Batteriehalter 60 eingesetzt ist, ist die Traktionsbatterie-Schnittstelle 58, beispielsweise ein elektrischer Stecker, elektrisch verbunden mit einer komplementären rahmenfesten BUS-Buchse 90, die über eine als CAN-Bus ausgebildete Signalverbindung BUS mit einem zentralen elektronischen Mehrbatterien-Managementmodul 36 informell verbunden ist, das innerhalb des Traktionsantriebs 30 angeordnet ist. Der Traktionsantrieb 30 weist einen Rahmenpositions-Kennwertspeicher 38 auf, in dem für alle Traktionsbatterie-Rahmenpositionen P1-P6 typische Traktionsbatterie-Sensor-Referenzwerte hinterlegt sind für Traktionsbatterien, die in den Batteriehalter 60 in der betreffenden Rahmenposition P1-P6 eingesetzt sind. Der Traktionsantrieb 30 weist ferner einen dreidimensionalen elektronischen Beschleunigungs-Sensor S1', einen dreidimensionalen elektronischen Raumlage-Sensor S2' und einen elektronischen Erdmagnetfeld-Sensor S3' auf, die informell mit dem Mehrbatterien-Managementmodul 36 verbunden sind. Schließlich weist der Traktionsantrieb 30 eine Leistungselektronik 34 auf, die von dem Mehrbatterien-Managementmodul 36 angesteuert wird und die die über separate Energieleitungen 94 von den Traktionsbatterien 50 zur Verfügung gestellte elektrische Energie bedarfsweise an den Antriebsmotor 32 leitet. Die Anzeigeeinheit 40' weist ein optisches Display 42 auf.

Durch einen Abgleich der von den Traktionsbatterie-Sensoren S1-S3 aller Traktionsbatterien 50 in den verschiedenen Rahmenpositionen P1-P6 übermittelten Sensorwerte mit den in dem Rahmenpositions-Kennwertspeicher 38 hinterlegten typischen Traktionsbatterie-Sensor-Referenzwerten bestimmt das Mehrbatterien-Managementmodul 36 die Rahmenposition P1-P6 jeder eingesetzten Traktionsbatterie 50, verknüpft die ermittelte Rahmenposition P1-P6 mit der individuellen Identifikation der Traktionsbatterien 50 und mit dem Ladezustand der Traktionsbatterien 50. Das Mehrbatterien-Managementmodul 36 sorgt schließlich dafür, dass auf der optischen Anzeige 42 der Ladezustand und die Rahmenposition P1-P5 einer oder mehrerer Traktionsbatterien 50 angezeigt wird.

Falls die Traktionsbatterien 50 jeweils selbst Sensoren S1,S2,S3 und einen Rahmenpositions-Kennwertspeicher P aufweisen, kann der Rahmenpositions-Kennwertspeicher 38 innerhalb des Traktionsantriebs 30 wegfallen.

In jedem Fall kann das Mehrbatterien-Managementmodul 36 zusätzlich noch die Sensorwerte der Traktionsantrieb-Sensoren S1',S2',S3' abgleichen mit den Sensorwerten der Traktionsbatterie-Sensoren S1,S2,S3, um auf diese Weise zusammen mit den in dem Rahmenpositions-Kennwertspeicher 38 hinterlegten typischen Traktionsbatterie-Sensor-Referenzwerten die Rahmenposition P1-P6 der Traktionsbatterien 50 noch genauer und redundanter zu bestimmen.

Die Sensordaten aller Sensoren S1,S2,S3, S1',S2',S3' können sowohl bei Stillstand als auch beim Fahren des Elektrofahrrads ermittelt und ausgewertet werden. Als weiterer Sensor kann ein Rad-Drehgeschwindigkeits-Sensor an einem Rad des Elektrofahrrads vorgesehen sein, um die durch diesen Sensor gemessenen und abgeleiteten Werte, beispielsweise die Beschleunigung, mit den Sensorwerten der übrigen Sensoren S1,S2,S3,S1',S2',S3' abgleichen zu können.

## Patentansprüche

1. Elektrofahrrad (10) mit einem Fahrradrahmen (20), einem an dem Fahrradrahmen (20) befestigten elektrischen Traktionsantrieb (30), mindestens zwei modularen Traktionsbatterien (50), die an verschiedenen Rahmenpositionen (P1-P6) an dem Elektrofahrrad (10) befestigt sind, einem elektronischen Mehrbatterien-Managementmodul (36), das den Ladezustand der Traktionsbatterien (50) ermittelt, und Signalverbindungen (BUS), durch die die Traktionsbatterien (50) informell mit dem Mehrbatterien-Managementmodul (36) verbunden sind,
**dadurch gekennzeichnet, dass** jede Traktionsbatterie (50) einen elektronischen Beschleunigungs-Sensor (S1), einen elektronischen Raumlage-Sensor (S2) und/oder einen elektronischen Erdmagnetfeld-Sensor (S3) aufweist,
wobei dem Mehrbatterien-Managementmodul (36) ein Rahmenpositions-Kennwertspeicher (38) zugeordnet ist, in dem für alle Traktionsbatterie-Rahmenpositionen (P1-P6) typische Traktionsbatterie-Sensor-Referenzwerte hinterlegt sind, und
wobei eine Gesamt-Ladezustands-Informationsschnittstelle (40) vorgesehen ist, die den Ladezustand der Traktionsbatterien (50) zusammen mit ihrer Rahmenposition (P1-P6) ausgibt.

2. Elektrofahrrad (10) nach Anspruch 1, wobei die modularen Traktionsbatterien (50) äußerlich identisch zueinander sind.

3. Elektrofahrrad (10) nach einem der vorangegangenen Ansprüche, wobei an dem Fahrradrahmen (20) mindestens zwei zueinander identischen Batteriehalter (60) vorgesehen sind, die jeweils einen Entriegelungs-Riegel (62) aufweisen, durch dessen Betätigung die Traktionsbatterie (50) aus dem Batteriehalter (60) entnommen werden kann.

4. Elektrofahrrad (10) nach einem der vorangegangenen Ansprüche, wobei die Gesamt-Ladezustands-Informationsschnittstelle (40) eine Anzeigeeinheit (40') ist, die den Batterie-Ladezustand einer Traktionsbatterie (50) zusammen mit ihrer Rahmenposition (P1- P6) anzeigt.

5. Elektrofahrrad (10) nach einem der vorangegangenen Ansprüche, wobei rahmenfest mit dem Fahrradrahmen (20) ein mehrdimensionaler elektronischer Beschleunigungs-Sensor (S1'), ein mehrdimensionaler elektronischer Raumlage-Sensor (S2') und/oder ein elektronischer Erdmagnetfeld-Sensor (S3') vorgesehen ist, besonders bevorzugt innerhalb des Traktionsantriebs (30) oder der Anzeigeeinheit (40').

6. Modulare Elektrofahrrad-Traktionsbatterie (50)
mit einem elektrischen Energiespeicherelement (54),
mit einer Traktionsbatterie-Ladeüberwachung (56), die den Ladezustand des Energiespeicherelements (54) ermittelt,
mit einem mehrdimensionalen elektronischen Beschleunigungs-Sensor (S1), einem mehrdimensionalen elektronischen Raumlage-Sensor (S2) und/oder einem elektronischen Erdmagnetfeld-Sensor (S3),
mit einer informellen Traktionsbatterie-Schnittstelle (58) zur Übermittlung des Ladezustands, **dadurch gekennzeichnet, dass** die modulare Elektrofahrrad-Traktionsbatterie (50) zusätzlich mit einem Rahmenpositions-Kennwertspeicher (P) ausgerüstet ist, in dem für alle möglichen Traktionsbatterie-Rahmenpositionen (P1-P6) an einem konkreten Fahrradrahmen (20) typische Traktionsbatterie-Sensor-Referenzwerte hinterlegt sind,
wobei die Traktionsbatterie-Ladeüberwachung (56) aus den gemessenen Sensorwerten des mindestens einen Traktionsbatterie-Sensors (S1,S2,S3) und mit Hilfe der in dem Rahmenpositions-Kennwertspeicher (P) hinterlegten typischen Traktionsbatterie-Sensor-Referenzwerte die Traktionsbatterie-Rahmenposition (P1-P6) ermittelt, und
wobei die Traktionsbatterie-Ladeüberwachung (56) die ermittelte Traktionsbatterie-Rahmenposition (P1-P6) an die Traktionsbatterie-Schnittstelle (58) übermittelt.

7. Modulare Elektrofahrrad-Traktionsbatterie (50) nach Anspruch 6, wobei die Sensordaten des Sensors bzw. der Sensoren (S1,S2,S3) an die Traktionsbatterie-Schnittstelle (58) übermittelt werden.

8. Modulare Elektrofahrrad-Traktionsbatterie (50) nach Anspruch 6 oder 7, wobei die Traktionsbatterie (50) ein Traktionsbatterie-Gehäuse (50') aufweist, und das Energiespeicherelement (54) innerhalb des Traktionsbatterie-Gehäuses (50') angeordnet ist.

9. Modulare Elektrofahrrad-Traktionsbatterie (50) nach Anspruch 8, wobei alle Traktionsbatterie-Sensoren (S1,S2,S3) innerhalb des Traktionsbatterie-Gehäuses (50') angeordnet sind.

## Claims

1. Electric bicycle (10) comprising a bicycle frame (20), an electric traction drive (30) attached to the bicycle frame (20), at least two modular traction batteries (50) attached to the electric bicycle (10) at different frame positions (P1-P6), an electronic multi-battery management module (36) which determines the state of charge of the traction batteries (50), and signal connections (BUS) by which the traction batteries (50) are informally connected to the multi-battery management module (36),
**characterised in that**
each traction battery (50) comprises an electronic acceleration sensor (S1), an electronic spatial position sensor (S2) and/or an electronic earth magnetic field sensor (S3),
wherein the multi-battery management module (36) is provided with a frame position reference memory (38) in which typical traction battery sensor reference values are stored for all traction battery frame positions (P1-P6), and
wherein an overall state of charge information interface (40) is provided which outputs the state of charge of the traction batteries (50) together with their frame position (P1-P6).

2. Electric bicycle (10) according to claim 1, wherein the modular traction batteries (50) are outwardly identical to each other.

3. Electric bicycle (10) according to one of the preceding claims, wherein at least two mutually identical battery holders (60) are provided at the bicycle frame (20), which respectively comprise an unlocking latch (62), by actuation of which the traction battery (50) can be removed from the battery holder (60).

4. Electric bicycle (10) according to any one of the preceding claims, wherein the overall state of charge information interface (40) is a display unit (40') which displays the battery state of charge of a traction battery (50) together with its frame position (P1- P6).

5. Electric bicycle (10) according to any one of the preceding claims, wherein a multi-dimensional electronic acceleration sensor (S1'), a multi-dimensional electronic spatial position sensor (S2') and/or an electronic geomagnetic field sensor (S3') is provided frame-fixed with the bicycle frame (20), more preferably within the traction drive (30) or the display unit (40').

6. Modular electric bicycle traction battery (50)
with an electric energy storage element (54),
with a traction battery charge monitor (56) which determines the state of charge of the energy storage element (54),
with a multi-dimensional electronic acceleration sensor (S1), a multi-dimensional electronic spatial position sensor (S2) and/or an electronic earth magnetic field sensor (S3),
with an informal traction battery interface (58) for transmitting the state of charge, **characterized in that** the modular electric bicycle traction battery (50) is additionally equipped with a frame position characteristics memory (P),
in which typical traction battery sensor reference values are stored for all possible traction battery frame positions (P1-P6) on a specific bicycle frame (20),
wherein the traction battery charge monitoring system (56) determines the traction battery frame position (P1-P6) from the measured sensor values of the at least one traction battery sensor (S1, S2, S3) and with the aid of the typical traction battery sensor reference values stored in the frame position characteristics memory (P), and
wherein the traction battery charge monitor (56) transmits the determined traction battery frame position (P1-P6) to the traction battery interface (58).

7. Modular electric bicycle traction battery (50) according to claim 6, wherein the sensor data of the sensor(s) (S1,S2,S3) are transmitted to the traction battery interface (58).

8. Modular electric bicycle traction battery (50) according to claim 6 or 7, wherein the traction battery (50) comprises a traction battery housing (50'), and the energy storage element (54) is arranged within the traction battery housing (50').

9. Modular electric bicycle traction battery (50) according to claim 8, wherein all traction battery sensors (S1,S2,S3) are arranged within the traction battery housing (50').

## Revendications

1. Bicyclette électrique (10) comprenant un cadre de bicyclette (20), un entraînement de traction électrique (30) fixé au cadre de bicyclette (20), au moins deux batteries de traction modulaires (50) fixées à la bicyclette électrique (10) à différentes positions de cadre (P1-P6), un module électronique de management multi-batteries (36) qui détermine les niveaux de charge des batteries de traction (50), et des connexions de signalisation (BUS) par lesquelles les batteries de traction (50) sont connectées de manière informelle au module de management multi-batteries (36), **caractérisé en ce que**
chaque batterie de traction (50) comprend un capteur électronique d'accélération (S1), un capteur électronique de position spatiale (S2) et/ou un capteur électronique de champ magnétique terrestre (S3),
une mémoire de valeurs caractéristiques de position de cadre (38) étant associée au module de management multi-batteries (36), dans laquelle des valeurs de référence de capteur de batterie de traction typiques sont mémorisées pour toutes les positions de cadre de batterie de traction (P1-P6), et
une interface d'information d'état de charge totale (40) étant prévue, qui émet l'état de charge des batteries de traction (50) avec leur position de cadre (P1-P6).

2. Bicyclette électrique (10) selon la revendication 1, dans laquelle les batteries de traction modulaires (50) sont extérieurement identiques les unes aux autres.

3. Bicyclette électrique (10) selon l'une quelconque des revendications précédentes, dans laquelle il est prévu sur le cadre (20) de la bicyclette au moins deux supports de batterie (60) identiques entre eux, qui comprennent chacun un verrou de déverrouillage (62) dont l'actionnement permet d'extraire la batterie de traction (50) du support de batterie (60).

4. Bicyclette électrique (10) selon l'une quelconque des revendications précédentes, dans laquelle l'interface d'information d'état de charge totale (40) est une unité de visualisation (40') qui indique l'état de charge de la batterie d'une batterie de traction (50) avec sa position de cadre (P1- P6).

5. Bicyclette électrique (10) selon l'une des revendications précédentes, dans laquelle un capteur électronique multidimensionnel d'accélération (S1'), un capteur électronique multidimensionnel de position dans l'espace (S2') et/ou un capteur électronique de champ magnétique terrestre (S3') sont prévus intégrés au cadre (20) de la bicyclette, de préférence à l'intérieur de l'entraînement de traction (30) ou de l'unité de visualisation (40').

6. Batterie de traction modulaire pour bicyclette électrique (50).
avec un élément de charge d'énergie électrique (54),
avec un contrôle de charge de la batterie de traction (56), qui détermine l'état de charge de l'élément de charge (54),
avec un capteur électronique multidimensionnel d'accélération (S1), un capteur électronique multidimensionnel de position spatiale (S2) et/ou un capteur électronique de champ magnétique terrestre (S3),
avec une interface de batterie de traction informelle (58) pour transmettre l'état de charge, **caractérisé en ce que** la batterie de traction modulaire pour bicyclette électrique (50) est en outre équipée d'une mémoire de valeurs caractéristiques de position de cadre (P),
dans laquelle des valeurs de référence de capteur de batterie de traction typiques sont stockées pour toutes les positions de cadre de batterie de traction possibles (P1-P6) sur un cadre de bicyclette concret (20),
la surveillance de charge de batterie de traction (56) détermine la position de cadre de batterie de traction (P1-P6) à partir des valeurs de capteur mesurées de l'au moins un capteur de batterie de traction (S1, S2, S3) et avec l'aide des valeurs de référence de capteur de batterie de traction typiques enregistrées dans la mémoire de valeurs caractéristiques de position de cadre (P), et
la contrôle de charge de la batterie de traction (56) transmettant la position de cadre de la batterie de traction (P1-P6) déterminée à l'interface de la batterie de traction (58).

7. Batterie de traction modulaire pour bicyclette électrique (50) selon la revendication 6, dans laquelle les valeurs de capteur du ou des capteurs (S1, S2, S3) sont transmises à l'interface de batterie de traction (58).

8. Batterie de traction modulaire pour bicyclette électrique (50) selon la revendication 6 ou 7, dans laquelle la batterie de traction (50) comprend un boîtier de batterie de traction (50'), et l'élément de charge (54) est disposé à l'intérieur du boîtier de batterie de traction (50').

9. Batterie de traction modulaire pour bicyclette électrique (50) selon la revendication 8, dans laquelle tous les capteurs de batterie de traction (S1, S2, S3) sont situés à l'intérieur du boîtier de batterie de traction (50').
